# EUROPEAN PATENT SPECIFICATION

(11) **EP 3 770 455 B1**
(45) Date of publication and mention of the grant of the patent: **09.03.2022**
(21) Application number: 20186856.9
(22) Date of filing: 21.07.2020
(51) Int. Cl.: F16D 43/18

(54) **CENTRIFUGAL FRICTION CLUTCH WITH CENTRIFUGAL MASSES THEMSELVES AS CLUTCHING MEMBERS**
FLIEHKRAFTREIBUNGSKUPPLUNG MIT SCHWUNGMASSEN SELBST ALS KUPPLUNGSGLIEDER
EMBRAYAGE CENTRIFUGE À FRICTION AVEC MASSES CENTRIFUGES ELLES-MÊMES CONSTITUANT LES ORGANES D'EMBRAYAGE

(30) Priority: 25.07.2019 IT 201900012840
(43) Date of publication of application: 27.01.2021
(73) Proprietor: Pezzimenti, Fortunato, 21052 Busto Arsizio (VA) (IT)
(72) Inventor: Pezzimenti, Fortunato, 21052 Busto Arsizio (VA) (IT)
(74) Representative: Rastelli, Franco

(56) References cited:
- DE-C- 677 239
- DE-U1-202007 002 755
- FR-A- 828 455
- US-A- 2 166 357
- US-A- 2 991 865
- US-A- 3 367 464
- US-A1- 2012 298 465

## Description

### BACKGROUND OF THE INVENTION

The present invention relates to an enhanced type centrifugal clutch.

The field of the invention is that of centrifugal clutch couplings which are used to transmit motion from a motor unit to the conducted machine.

Current type of centrifugal clutches are provided with floating sectors which, from the start of rotation of the driving shaft and under the action of centrifugal force, are engaged by friction on the conducted part, transmitting to it the motion from the first motor revolutions.

However, there are applications in which the transmission of motion must not take place from the start of rotation of the driving shaft, but only upon reaching a predetermined speed revolution. This is the case, for example, for boat engines and diesel or gasoline engines in general, in which there must be no transmission of torque at idle speed. For this purpose, traditional disk clutches are used, which however suffer from drawbacks related to their weight, as well as to the cost and wear of the respective parts in friction.

DE677239C discloses a centrifugal clutch, of the type including an outer shell moved in rotation by a driving shaft. The clutch includes spaced fixed sectors rotating with the outer shell and floating sectors arranged between the fixed sectors. The floating sectors are equipped with control devices with springs to determine the engaging and disengaging of the clutch depending on the rotational speed of the outer shell. US2166357A discloses a centrifugal clutch provided with fixed and floating sectors and control devices on the fixed or floating sectors. The control devices may included springs with spheres at their ends.

US2012298465A1 concerns a centrifugal clutch including a radially inward drive hub and a radially outward drum.

The clutch includes spaced fixed sectors rotating with the drive hub and floating sectors arranged between the fixed sectors. The floating sectors are equipped with control devices with springs to determine the engaging and disengaging of the clutch depending on the rotational speed of the drive hub.

### SUMMARY OF THE INVENTION

The main object of the present invention is to provide a centrifugal clutch which, unlike traditional clutches of this type, allows transmission of motion to be started, or an engagement ratio to be established, not from the starting to rotate of the driving shaft, but only after it reaches a predetermined speed revolution.

This and other objects are achieved with the centrifugal clutch of claims 1 or 2.

Preferred embodiments of the invention will be apparent from the remaining claims.

Compared to the known centrifugal clutches, the one according to the invention offers the advantage of remaining in neutral at a speed revolution lower than the preset one, engaging instead only when this minimum speed revolution is exceeded.

The clutch of the invention also offers the advantage of restoring the neutral position as the aforementioned speed revolution reduces, so as to achieve the desired reversibility of the coupling.

A further advantage of the invention is represented by the possibility of regulating the tension of the means that hold the floating sectors on the driving part, so as to be able to select the speed revolution at which the engagement is carried out.

### BRIEF DESCRIPTION OF THE DRAWINGS

These and other objects, advantages and features according to the present invention will be more evident from the following description of some preferred embodiments of the clutch of the invention, given by way of example and without limitation referring to the attached drawing sheets in which :
- Figure 1 is a schematic view of a first example of application of the clutch of the invention;
- Figure 2 shows an exploded view of the clutch in figure 1;
- Figures 3 and 4 show in cross section and in a front view the clutch of Figure 2 in neutral position;
- Figures 5 and 6 illustrate the clutch of Figures 3 and 4 in the working or engagement position;
- Figures 7 to 16 illustrate further embodiment variations of the clutch of the previous figures.

### DESCRIPTION OF THE PREFERRED EMBODIMENTS

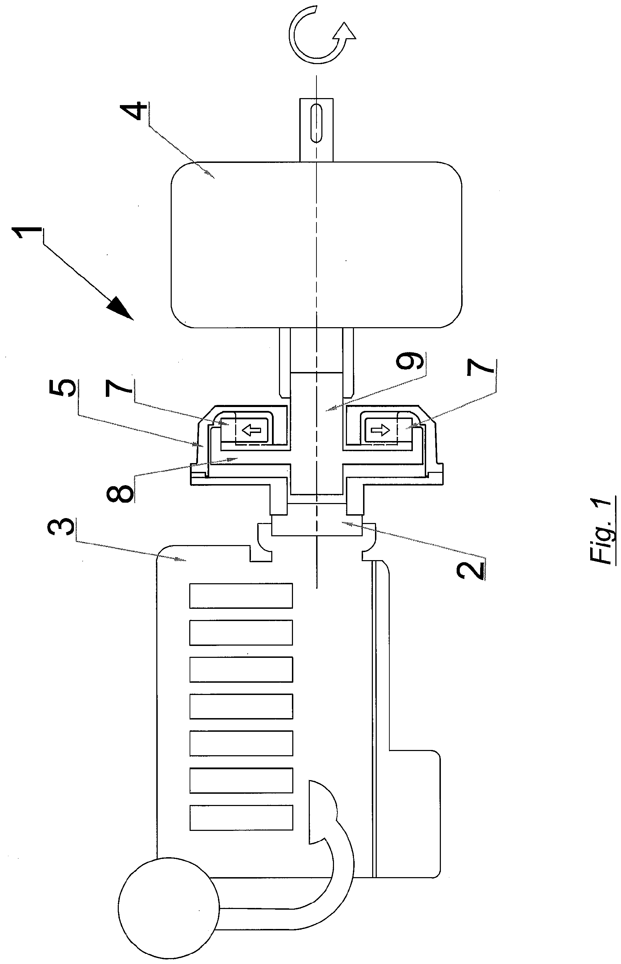

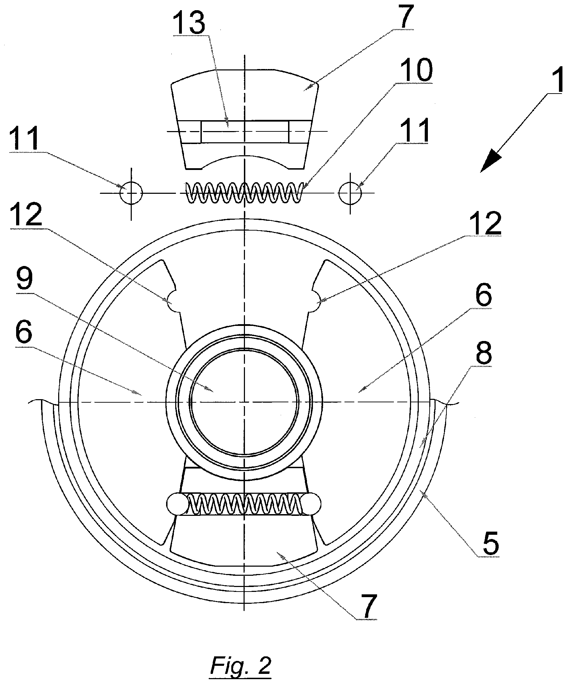

The clutch of the invention, indicated with reference 1 in figures 1 and 2, is used to transmit motion from the flywheel 2 of a motor 3 to a conducted machine or gearbox 4.

For this purpose, the clutch 1 has an outer shell 5, which receives the rotation motion from the flywheel 2. The rotation of the shell 5 is then transmitted to fixed sectors 6, mutually spaced and between which the floating sectors 7 of the clutch 1 are arranged. The aforementioned sectors 7 are suitable for moving radially towards the external side of the clutch, in the space between the fixed sectors 6, until they come into contact with a ring 8 which forms the conducted part of the clutch and which is rotated through the aforementioned contact with the floating sectors 7. Upon contact between these parts, the rotation of the ring 8 is transmitted to the shaft 9 which forms an integral part therewith and, hence, to the gearbox 4.

According to the invention, each floating sector 7 is provided with an adjustable effort holding device of the same sector 7 on the respective fixed sectors 6 adjacent to it.

In the example shown in figure 2, this device consists of a spring 10 provided at its ends with spheres 11 which snap fit into the respective locations 12 provided on the sides of the fixed sectors 6 which face the corresponding sides of the floating sectors 7.

According to the invention, the floating sectors 7 in turn have a through seat 13 for housing the aforementioned spring 10. This seat 13 is in a position aligned with the locations 12 of the fixed sectors 6, so as to achieve a corresponding alignment between the spheres 11 of the spring 10 and said locations 12.

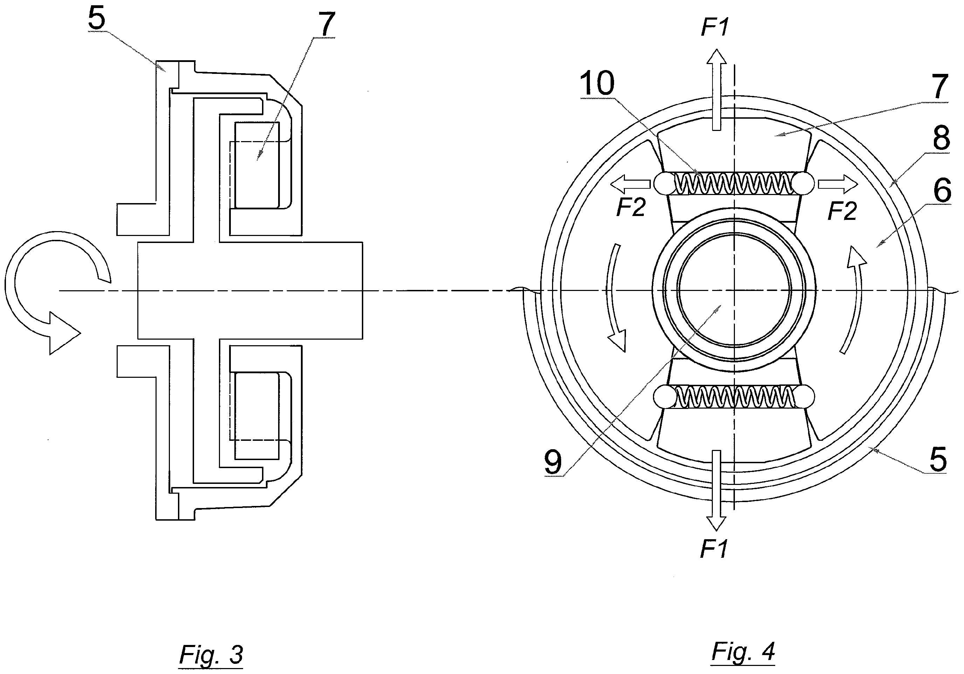

In the neutral position of the clutch shown in figures 3 and 4, the rotation of the outer shell 5 in the initial phase when the speed revolution of motor 3 is lower than a predetermined value generates on the floating sectors 7 a centrifugal force F1 which is not sufficient to overcome the resistant force F2 generated by the spring 10 on the spheres 11 which are housed in the locations 12 of the fixed sectors 6. In this condition the floating sectors 7 are held on the body of the fixed sectors 6 and the clutch is in neutral position.

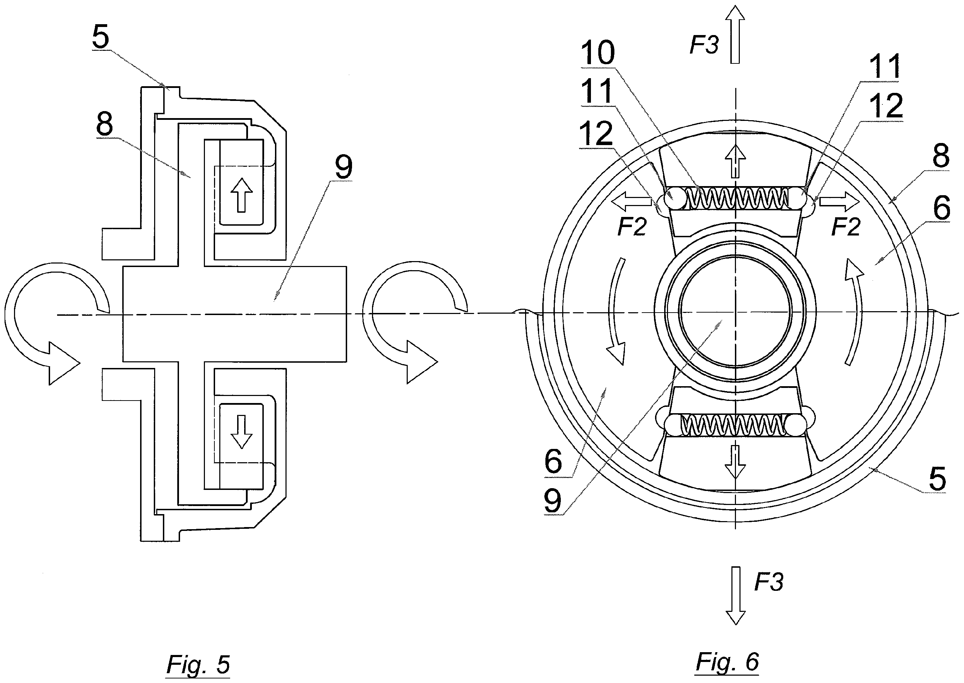

In the subsequent engagement phase of clutch 1 illustrated in figures 5 and 6, the increase in the speed revolution of the outer shell 5, conducted by the corresponding rotation of the motor 3, generates a centrifugal force F3 which is greater than F1 of figure 4, until a point is reached where it overcomes the resistance F2 of the spring 10. In this condition, the spheres 11 of the spring 10 exit from their location 12 in the fixed sectors 6 and allow the floating sectors 7 to slide radially outwards, in the direction of the conducted ring 8, thus establishing a clutch action which allows motion to be transmitted to the conducted machine 4 through the set formed by ring 8 and shaft 9.

According to the invention, in the clutch engagement position 1, as shown in Figure 6, the spheres 11 are in an unstable equilibrium condition, arranged outside their location 12 and resting against the edge of the aforementioned locations 12 of the fixed sectors 6. In this way, the decrease in the speed revolution of motor 3 corresponds to a similar decrease in the centrifugal force F3, which allows the spring 10 to recall the spheres 11 within their locations 12 in the aforementioned sectors 6. This reverses the engagement/disengagement process of clutch 1, which allows the latter to be operated in its neutral and engagement positions respectively.

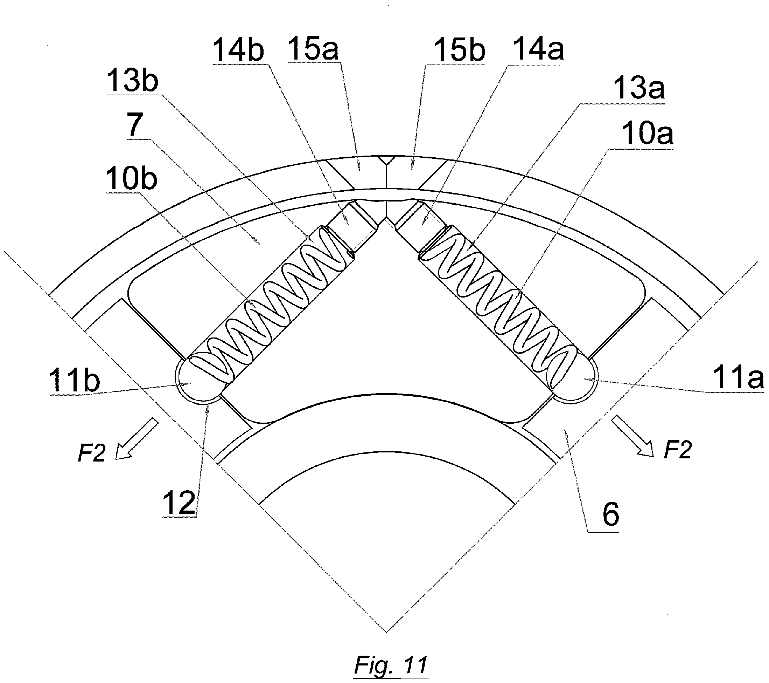

In the variant shown in figure 11, each floating sector 7 is provided with two locations 13a, 13b for respective springs 10a, 10b each provided, at the end facing the external side of the clutch, with a threaded dowel 14a, 14b suitable for adjusting the elastic force F2 with which the springs 10a, 10b hold the corresponding floating sector 7 in place on the respective fixed sectors 6. In this way it is possible to adjust the force F2 of springs 10a, 10b and this makes it possible to choose the speed revolution of the motor 3 at which the centrifugal clutch of the invention is engaged and disengaged. The ends of the springs 10a, 10b which face the respective fixed sector 6 are instead provided with spheres 11a, 11b suitable for being housed in the respective locations 12 of the corresponding fixed sectors 6.

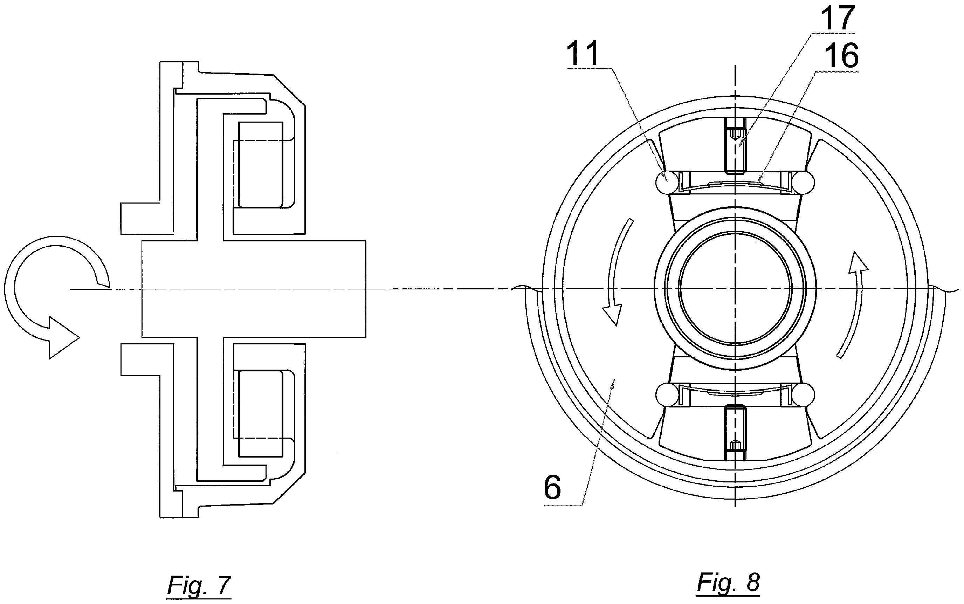

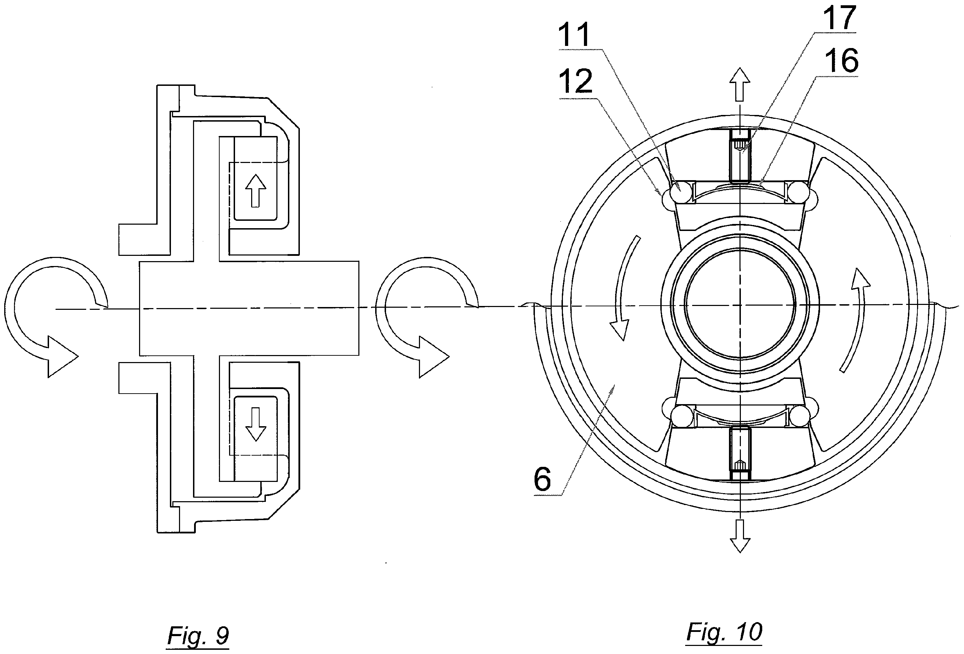

In the variant shown in figures from 7 to 10, where figures 7, 8 illustrate the clutch in its neutral position while figures 9, 10 illustrate the clutch in the engagement position, instead of spring 10 a leaf spring mechanism is used, of the type formed by a leaf spring 16 which compresses the spheres 11 in the locations 12 of the fixed sectors 6. Again in this case it is possible to provide a system for adjusting the engagement force of the leaf spring 16 in the respective locations 12 of the fixed sectors 6, for example by means of threaded dowels 17 which act on the convex side of the leaf spring 16, increasing the thrust force on spheres 11.

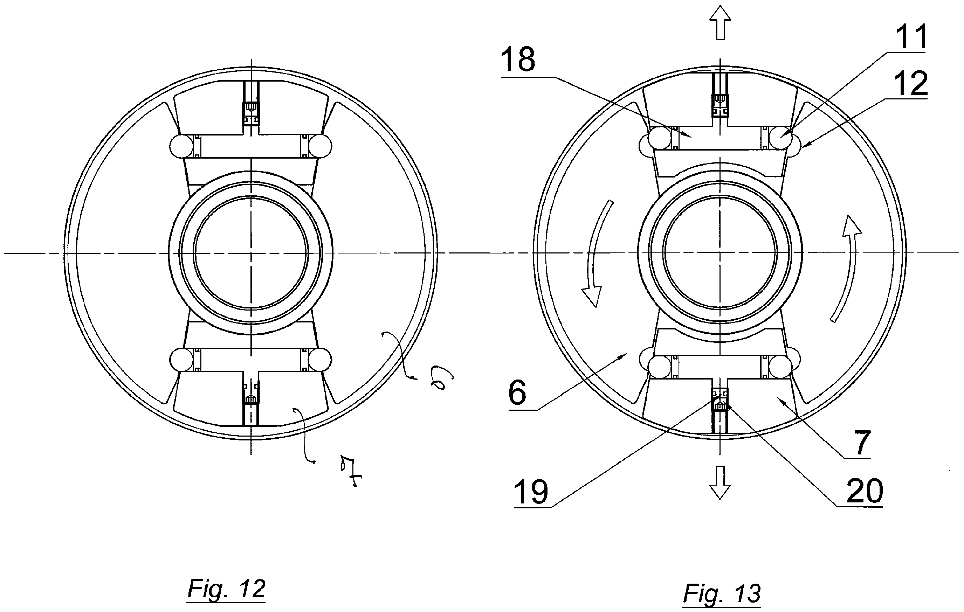

According to the further variant of the invention illustrated in figures 12 and 13, the spring 10 is replaced by pneumatically or hydraulically actuated pistons 18, provided with a system 19 for controlling the force holding the floating sectors 7 in place on the fixed sectors 6. Said system 19 can for example consist of pads with a seal pushed by the dowel 20.

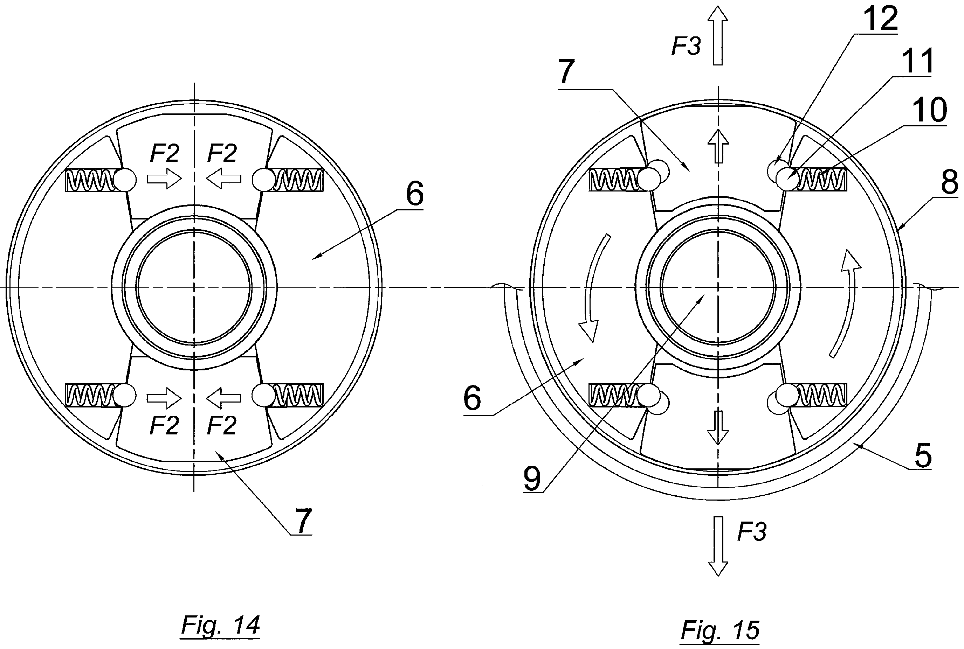

In the variant of the clutch of the invention illustrated in figures 14 and 15, the springs 10 are transferred from the floating sectors 7 to the fixed ones 6, according to an operating principle which substantially repeats that described by figures 4 and 6 above. In this case, the spring 10 - sphere 11 system is placed on the fixed sectors 6, the only sphere 11 being housed inside the corresponding location 12 provided on the respective floating sector 7. In particular, figure 14 illustrates the clutch in its neutral position, while in figure 15 the clutch is in its engagement position, when the spheres 11 are in an unstable equilibrium condition, resting on the edge of the locations 12 which face the clutch interior, i.e. closer to the shaft 9 of the latter. A similar arrangement is also applicable to the described control systems with leaf-spring mechanism, or with pneumatically or hydraulically actuated pistons, mounted on the fixed sectors instead of on the floating ones.

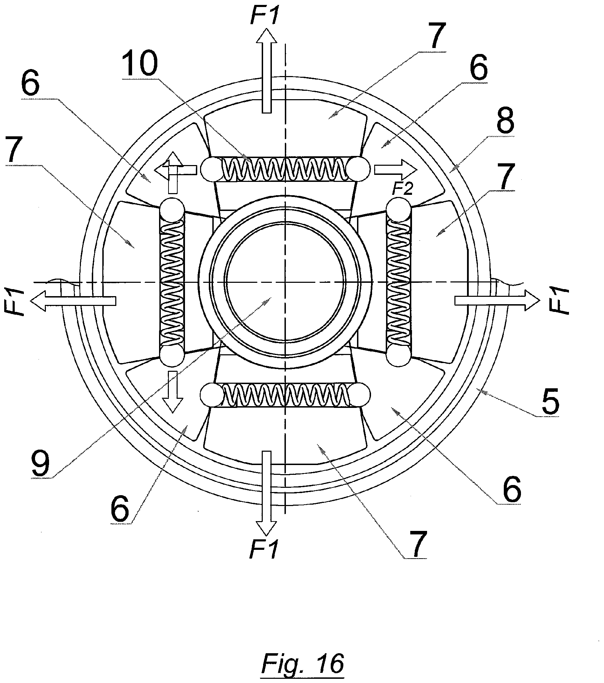

In the variant shown in Figure 16, the clutch of the invention is provided with four floating sectors 7, mounted so as to slide in the space between an equal number of fixed sectors 6.

In the invention, as described above and illustrated in the attached drawings, changes may be made in order to produce variants which nevertheless fall within the scope of the claims that follow. Thus, for example, the number of fixed and floating sectors could also be different from the examples given above.

## Claims

1. Centrifugal clutch, of the type including an outer shell (5) for receiving rotation motion of a motor (3), an internal conducted part (8, 9), fixed sectors (6) mutually spaced and floating sectors (7) arranged floating in the interspace between the fixed sectors (6), in which rotation of the outer shell (5) is transmitted to said fixed sectors (6), in which said floating sectors (7) are suitable for moving radially towards the external side of the clutch until they come into contact with a ring (8) of the conducted part (8, 9), in which the aforementioned floating sectors (7) are equipped with control devices for holding said floating sectors (7) on the corresponding fixed sectors (6) adjacent to them, which determine the coupling connection and disconnection of the same floating sectors (7) with respect to the fixed sectors (6), depending on the speed revolution of said outer shell (5), in which the mentioned control devices consist of springs (10, 16, 18) (10) positioned in correspondence with said floating sectors (7) and provided at their ends with spheres (11) that snap fit into respective locations (12) provided on the corresponding sides of the fixed sectors (6), in the engagement position of said clutch the spheres (11) being arranged in an unstable equilibrium condition on the edge of the aforementioned locations (12) of the fixed sectors (6) so that, when the speed revolution of said outer shell (5) is less than a predetermined value, there is a corresponding decrease in the centrifugal force, which allows the springs (10) to recall the spheres (11) within their locations (12) in the same fixed sectors (6).

2. Centrifugal clutch, of the type including an outer shell (5) for receiving rotation motion of a motor (3), an internal conducted part (8, 9), fixed sectors (6) mutually spaced and floating sectors (7) arranged floating in the interspace between the fixed sectors (6), in which rotation of the outer shell (5) is transmitted to said fixed sectors (6), in which said floating sectors (7) are suitable for moving radially towards the external side of the clutch until they come into contact with a ring (8) of the conducted part (8, 9), in which the aforementioned floating sectors (7) are equipped with control devices for holding said floating sectors (7) on the corresponding fixed sectors (6) adjacent to them, which determine the coupling connection and disconnection of the same floating sectors (7) with respect to the fixed sectors (6), depending on the speed revolution of said outer shell (5), in which the aforementioned control devices consist of springs (10, 16, 18) arranged at the aforementioned fixed sectors (6) and provided at their ends with a sphere (11) that snap fits into said location (12) on the corresponding side of the floating sectors (7), in the engagement condition of said clutch, the spheres (11) being arranged in an unstable equilibrium condition on the edge of the aforementioned locations (12) of the floating sectors (7) so that, when the speed revolution of said outer shell (5) is less than a predetermined value, there is a corresponding decrease in the centrifugal force, which allows the springs (10) to recall the spheres (11) within their locations (12) in the same floating sectors (7).

3. Clutch according to claims 1 or 2, **characterized in that**, when the speed revolution of the outer shell (5) is lower than a predetermined value, the centrifugal force (F1) generated on the floating sectors (7) is less than the resistant force (F2) with which said control devices retain said sectors (7) between said fixed sectors (6), in this condition the floating sectors (7) being held coupled with the fixed sectors (6) and the clutch (1) being in neutral position.

4. Clutch according to claims 1 or 2, **characterized in that** when the speed revolution of the outer shell (5) is higher than a predetermined value, the centrifugal force (F3) generated on the floating sectors (7) is higher than the resistant force (F2) with which said control devices retain said sectors (7) between said fixed sectors (6), in this condition the floating sectors (7) being disconnected from the fixed sectors (6) and the clutch (1) being engaged.

5. Clutch according to claim 1, **characterized in that** the aforementioned floating sectors (7) have a through seat (13) housing said spring (10), the aforementioned seat (13) being arranged aligned with the locations (12) of the fixed sectors (6).

6. Clutch according to claims 1 or 2, **characterized in that** the aforementioned control devices consist of springs (10a,10b) positioned in their respective locations (13a,13b) of each floating sector (7), the end of the springs (10a,10b) facing the external side of the clutch having a threaded dowel (14a,14b) suitable for adjusting the elastic force (F2) with which the springs (10a,10b) hold the respective floating sector (7) in place on the respective fixed sectors (6), a corresponding sphere (11a, 11b) being provided at the end of the aforementioned springs (10a,10b) which is facing the respective fixed sector (6).

7. Clutch according to claims 1 or 2, **characterized in that** springs (10, 16, 18) of aforementioned control devices consist of leaf spring mechanisms (16), or pistons (18) with pneumatic or hydraulic actuation.

## Patentansprüche

1. Fliehkraftkupplung vom Typ, der eine äußere Hülle (5) zum Aufnehmen einer Drehbewegung eines Motors (3), einen internen Führungsteil (8, 9), feste Abschnitte (6), die voneinander beabstandet sind, sowie schwebende Abschnitte (7), die in dem Zwischenraum zwischen den festen Abschnitten (6) schwebend angeordnet sind, aufweist, wobei eine Drehung der äußeren Hülle (5) auf die festen Abschnitte (6) übertragen wird, wobei die schwebenden Abschnitte (7) zum Bewegen radial in Richtung der externen Seite der Kupplung geeignet sind, bis sie mit einem Ring (8) des Führungsteils (8, 9) in Kontakt kommen, wobei die zuvor erwähnten schwebenden Abschnitte (7) mit Steuervorrichtungen zum Halten der schwebenden Abschnitte (7) auf den entsprechenden festen Abschnitte (6) benachbart zu ihnen ausgestattet sind, welche die Kopplungsverbindung und -trennung derselben schwebenden Abschnitte (7) in Bezug auf die festen Abschnitte (6), in Abhängigkeit von der Drehzahl der äußeren Hülle (5), bestimmen, wobei die erwähnten Steuervorrichtungen aus Federn (10, 16, 18) (10) bestehen, die in Übereinstimmung mit den schwebenden Abschnitten (7) positioniert und an ihren Enden mit Kugeln (11) vorgesehen sind, die in jeweilige Stellen (12), die auf den entsprechenden Seiten der festen Abschnitte (6) vorgesehen sind, einrasten, wobei die Kugeln (11) in der Eingriffsposition der Kupplung in einem instabilen Gleichgewichtszustand auf der Kante der zuvor erwähnten Stellen (12) der festen Abschnitte (6) angeordnet sind, sodass, wenn die Drehzahl der äußeren Hülle (5) kleiner ist als ein vorbestimmter Wert, es zu einer entsprechenden Abnahme der Fliehkraft kommt, welche es den Federn (10) ermöglicht, die Kugeln (11) in ihre Stellen (12) in denselben festen Abschnitten (6) zurückzuführen.

2. Fliehkraftkupplung vom Typ, der eine äußere Hülle (5) zum Aufnehmen einer Drehbewegung eines Motors (3), einen internen Führungsteil (8, 9), feste Abschnitte (6), die voneinander beabstandet sind, sowie schwebende Abschnitte (7), die in dem Zwischenraum zwischen den festen Abschnitten (6) schwebend angeordnet sind, aufweist, wobei eine Drehung der äußeren Hülle (5) auf die festen Abschnitte (6) übertragen wird, wobei die schwebenden Abschnitte (7) zum Bewegen radial in Richtung der externen Seite der Kupplung geeignet sind, bis sie mit einem Ring (8) des Führungsteils (8, 9) in Kontakt kommen, wobei die zuvor erwähnten schwebenden Abschnitte (7) mit Steuervorrichtungen zum Halten der schwebenden Abschnitte (7) auf den entsprechenden festen Abschnitte (6) benachbart zu ihnen ausgestattet sind, welche die Kopplungsverbindung und -trennung derselben schwebenden Abschnitte (7) in Bezug auf die festen Abschnitte (6), in Abhängigkeit von der Drehzahl der äußeren Hülle (5), bestimmen, wobei die zuvor erwähnten Steuervorrichtungen aus Federn (10, 16, 18) bestehen, die an den zuvor erwähnten festen Abschnitten (6) angeordnet und an ihren Enden mit einer Kugel (11) vorgesehen sind, die in die Stelle (12), die auf der entsprechenden Seite der schwebenden Abschnitte (7) vorgesehen ist, einrastet, wobei die Kugeln (11) in dem Eingriffszustand der Kupplung in einem instabilen Gleichgewichtszustand auf der Kante der zuvor erwähnten Stellen (12) der schwebenden Abschnitte (7) angeordnet sind, sodass, wenn die Drehzahl der äußeren Hülle (5) kleiner ist als ein vorbestimmter Wert, es zu einer entsprechenden Abnahme der Fliehkraft kommt, welche es den Federn (10) ermöglicht, die Kugeln (11) in ihre Stellen (12) in denselben schwebenden Abschnitten (7) zurückzuführen.

3. Kupplung nach einem der Ansprüche 1 oder 2, **dadurch gekennzeichnet, dass**, wenn die Drehzahl der äußeren Hülle (5) niedriger ist als ein vorbestimmter Wert, die Fliehkraft (F1), welche auf den schwebenden Abschnitten (7) erzeugt wird, kleiner ist als die Widerstandskraft (F2), mit welcher die Steuervorrichtungen die Abschnitte (7) zwischen den festen Abschnitten (6) halten, wobei die schwebenden Abschnitte (7) in diesem Zustand mit den festen Abschnitten (6) gekoppelt gehalten werden und die Kupplung (1) sich in einer Leerlaufstellung befindet.

4. Kupplung nach einem der Ansprüche 1 oder 2, **dadurch gekennzeichnet, dass**, wenn die Drehzahl der äußeren Hülle (5) höher ist als ein vorbestimmter Wert, die Fliehkraft (F3), welche auf den schwebenden Abschnitten (7) erzeugt wird, größer ist als die Widerstandskraft (F2), mit welcher die Steuervorrichtungen die Abschnitte (7) zwischen den festen Abschnitten (6) halten, wobei die schwebenden Abschnitte (7) in diesem Zustand von den festen Abschnitten (6) getrennt werden und die Kupplung (1) in Eingriff steht.

5. Kupplung nach Anspruch 1, **dadurch gekennzeichnet, dass** die zuvor erwähnten schwebenden Abschnitte (7) einen Durchgangssitz (13) aufweisen, welcher die Feder (10) unterbringt, wobei der zuvor erwähnte Sitz (13) mit den Stellen (12) der festen Abschnitte (6) ausgerichtet angeordnet ist.

6. Kupplung nach einem der Ansprüche 1 oder 2, **dadurch gekennzeichnet, dass** die zuvor erwähnten Steuervorrichtungen aus Federn (10a, 10b) bestehen, die in ihren jeweiligen Stellen (13a, 13b) jedes schwebenden Abschnitts (7) positioniert sind, wobei das Ende der Federn (10a, 10b), das der externen Seite der Kupplung zugewandt ist, einen mit einem Gewinde versehenen Zapfen (14a, 14b) aufweist, der zum Einstellen der Federkraft (F2) geeignet ist, mit welcher die Federn (10a, 10b) den jeweiligen schwebenden Abschnitt (7) auf den jeweiligen festen Abschnitten (6) an Ort und Stelle halten, wobei eine entsprechende Kugel (11a, 11b) an dem Ende der zuvor erwähnten Federn (10a, 10b) vorgesehen ist, das dem jeweiligen festen Abschnitt (6) zugewandt ist.

7. Kupplung nach einem der Ansprüche 1 oder 2, **dadurch gekennzeichnet, dass** Federn (10, 16, 18) von zuvor erwähnten Steuervorrichtungen aus Blattfeder-Mechanismen (16) oder Kolben (18) mit pneumatischer oder hydraulischer Betätigung bestehen.

## Revendications

1. Embrayage centrifuge, du type comprenant une coque extérieure (5) destinée à recevoir le mouvement de rotation d'un moteur (3), une partie menée interne (8, 9), des secteurs fixes (6) mutuellement espacés et des secteurs flottants (7) disposés de façon flottante dans l'espace intermédiaire entre les secteurs fixes (6), dans lequel la rotation de la coque extérieure (5) est transmise auxdits secteurs fixes (6), dans lequel lesdits secteurs flottants (7) sont adaptés pour se déplacer radialement vers le côté extérieur de l'embrayage jusqu'à ce qu'ils entrent en contact avec une bague (8) de la partie menée (8, 9), dans lequel les secteurs flottants (7) mentionnés ci-dessus sont équipés de dispositifs de commande destinés à maintenir lesdits secteurs flottants (7) sur les secteurs fixes (6) correspondants adjacents à ceux-ci, lesquels déterminent l'accouplement et le désaccouplement des mêmes secteurs flottants (7) par rapport aux secteurs fixes (6), en fonction de la vitesse de rotation de ladite coque extérieure (5), dans lequel les dispositifs de commande mentionnés consistent en des ressorts (10, 16, 18) (10) positionnés en correspondance avec lesdits secteurs flottants (7) et dotés de sphères (11) à leurs extrémités, lesquelles s'enclenchent dans des zones (12) respectives disposées sur les côtés correspondants des secteurs fixes (6), dans la position d'engagement dudit embrayage, les sphères (11) étant agencées dans un état d'équilibre instable sur le bord des zones (12) des secteurs fixes (6) mentionnées ci-dessus, de telle façon que lorsque la vitesse de rotation de ladite coque extérieure (5) est inférieure à une valeur prédéterminée, la force centrifuge diminue de façon correspondante, permettant ainsi aux ressorts (10) de ramener les sphères (11) vers leurs zones (12) dans les mêmes secteurs fixes (6) .

2. Embrayage centrifuge, du type comprenant une coque extérieure (5) destinée à recevoir le mouvement de rotation d'un moteur (3), une partie menée interne (8, 9), des secteurs fixes (6) mutuellement espacés et des secteurs flottants (7) disposés de façon flottante dans l'espace intermédiaire entre les secteurs fixes (6), dans lequel la rotation de la coque extérieure (5) est transmise auxdits secteurs fixes (6), dans lequel lesdits secteurs flottants (7) sont adaptés pour se déplacer radialement vers le côté extérieur de l'embrayage jusqu'à ce qu'ils entrent en contact avec une bague (8) de la partie menée (8, 9), dans lequel les secteurs flottants (7) mentionnés ci-dessus sont équipés de dispositifs de commande destinés à maintenir lesdits secteurs flottants (7) sur les secteurs fixes (6) correspondants adjacents à ceux-ci, lesquels déterminent l'accouplement et le désaccouplement des mêmes secteurs flottants (7) par rapport aux secteurs fixes (6), en fonction de la vitesse de rotation de ladite coque extérieure (5), dans lequel les dispositifs de commande mentionnés consistent en des ressorts (10, 16, 18) agencés au niveau des secteurs fixes (6) mentionnés ci-dessus et dotés d'une sphère (11) à leurs extrémités, laquelle s'enclenche dans ladite zone (12) sur le côté correspondant des secteurs flottants (7), dans la position d'engagement dudit embrayage, les sphères (11) étant agencées dans un état d'équilibre instable sur le bord des zones (12) des secteurs flottants (7) mentionnées ci-dessus, de telle façon que lorsque la vitesse de rotation de ladite coque extérieure (5) est inférieure à une valeur prédéterminée, la force centrifuge diminue de façon correspondante, permettant ainsi aux ressorts (10) de ramener les sphères (11) vers leurs zones (12) dans les mêmes secteurs flottants (7).

3. Embrayage selon les revendications 1 ou 2, **caractérisé en ce que** lorsque la vitesse de rotation de la coque extérieure (5) est inférieure à une valeur prédéterminée, la force centrifuge (F1) générée sur les secteurs flottants (7) est inférieure à la force de résistance (F2) avec laquelle lesdits dispositifs de commande retiennent lesdits secteurs (7) entre lesdits secteurs fixes (6), les secteurs flottants (7) étant, dans cet état, maintenus en accouplement avec les secteurs fixes (6) et l'embrayage (1) étant dans une position neutre.

4. Embrayage selon les revendications 1 ou 2, **caractérisé en ce que** lorsque la vitesse de rotation de la coque extérieure (5) est supérieure à une valeur prédéterminée, la force centrifuge (F3) générée sur les secteurs flottants (7) est supérieure à la force de résistance (F2) avec laquelle lesdits dispositifs de commande retiennent lesdits secteurs (7) entre lesdits secteurs fixes (6), les secteurs flottants (7) étant, dans cet état, désaccouplés des secteurs fixes (6) et l'embrayage (1) étant engagé.

5. Embrayage selon la revendication 1, **caractérisé en ce que** les secteurs flottants (7) mentionnés ci-dessus comportent un siège traversant (13) accueillant ledit ressort (10), le siège (13) mentionné ci-dessus étant agencé de façon alignée avec les zones (12) des secteurs fixes (6).

6. Embrayage selon les revendications 1 ou 2, **caractérisé en ce que** les dispositifs de commande mentionnés ci-dessus consistent en des ressorts (10a, 10b) positionnés dans leurs zones respectives (13a, 13b) de chaque secteur flottant (7), l'extrémité des ressorts (10a, 10b) tournée vers le côté extérieur de l'embrayage présentant un goujon fileté (14a, 14b) adapté pour régler la force élastique (F2) avec laquelle les ressorts (10a, 10b) maintiennent le secteur flottant (7) respectif en place sur les secteurs fixes (6) respectifs, une sphère (11a, 11b) correspondante tournée vers le secteur fixe (6) respectif étant disposée à l'extrémité des ressorts (10a, 10b) mentionnés ci-dessus.

7. Embrayage selon les revendications 1 ou 2, **caractérisé en ce que** les ressorts (10, 16, 18) des dispositifs de commande mentionnés ci-dessus consistent en des mécanismes de ressorts à lames (16), ou en des pistons (18) à actionnement pneumatique ou hydraulique.
